# EUROPEAN PATENT APPLICATION

(11) **EP 2 568 593 A2**
(43) Date of publication of application: **13.03.2013**
(21) Application number: 12178694.1
(22) Date of filing: 31.07.2012
(51) Int. Cl.: H02M 7/538

(54) **Current regulator**

(30) Priority: 06.09.2011 JP 2011194349
(71) Applicant: Hitachi Automotive Systems, Ltd., Hitachinaka-shi Ibaraki 312-8503 (JP)
(72) Inventor: Hirotsu, Teppei, Tokyo, 100-8220 (JP); KANEKAWA, Nobuyasu, Tokyo, 100-8220 (JP); Ishida, Ryosuke, Ibaraki, 312-8503 (JP); Yamada, Tsutomu, Tokyo, 100-8220 (JP); Sato, Chihiro, Ibaraki, 312-8503 (JP)
(74) Representative: MERH-IP Matias Erny Reichl Hoffmann

(57) **Abstract**

A current regulator has a current regulating semiconductor device 1 and a microcontroller 12 which outputs a PWM pulse for driving a load to the current regulating semiconductor device 1 and receives outputs of a high-side current detection circuit 6 and a low-side current detection circuit 7 from the current regulating semiconductor device 1. An output mixer of the current regulating semiconductor device 1 switches, in synchronization with the PWM pulse, between the output of the high-side current detection circuit 6 and the output of the low-side current detection circuit 7 on one signal line to output the output to the microcontroller 12.

## Description

### BACKGROUND OF THE INVENTION

### 1. Field of the Invention

The present invention relates to a current regulator, and more particularly to a current regulator which suitably incorporates a current detection circuit into an IC chip.

### 2. Description of the Related Art

As various types of objects to be controlled are electrically controlled, electric actuators such as motors or solenoids have come into widespread use for converting an electric signal into mechanical motion or hydraulic pressure. For the sophistication of these electric actuators, highly accurate current regulation is essential. In recent years, digital feedback control has been generally used for highly accurate current regulation.

Moreover, there are also high needs for a reduction in the size and cost of a regulator, in addition to highly accurate current regulation. To respond to the needs, a current detection circuit is incorporated into an IC chip.

For incorporating a current detection circuit into an IC chip, regulators which achieve low loss due to current detection using a sense MOS and incorporates a current detecting circuit into an IC chip have been known.

A regulator disclosed in JP-A-2006-203415 includes in an IC chip a high-side MOS, a low-side MOS, current detection circuits, an AD converter, and a control unit. However, in such a hybrid IC of power, analog, and logic, it is difficult to miniaturize a logic unit, so that the proportion of the logic unit to the entire IC is increased. On the other hand, in recent microcontrollers, the performance of the microcontroller and the function of a peripheral function such as an AD have been enhanced. Therefore, the entire size or cost of a current regulator can be suppressed rather by replacing an AD converter or a logic unit mounted on an IC in the related art with an AD converter or software of a microcontroller.

Here, an IC shown in the third embodiment of JP-A-2006-203415 includes high-side and low-side current detection circuits, so that it is possible to perform highly accurate current regulation. In the case where an AD converter and a control unit in the IC are respectively replaced with an AD converter and software in a microcontroller for reducing the entire size and cost of a current regulator using the IC, two signals between the IC and the microcontroller and two channels for the AD converter of the microcontroller are required for capturing high-side and low-side current detection signals. Here, in the case of a current regulator which performs current regulation for a plurality of channels, for example, six channels, 12 signals between an IC and a microcontroller and 12 channels for an AD converter of the microcontroller are required for capturing high-side and low-side current detection signals, which increases the cost and size of an IC package due to an increase in the number of pins of the IC and increases the cost due to adoption of a high-function microcomputer mounting thereon a multi-channel AD converter. As a result, there arises a problem that the entire size and cost of the current regulator are not reduced.

### SUMMARY OF THE INVENTION

It is an object of the invention to provide a current regulator which is configured using a microcontroller and a current regulating IC, and reduced in size and cost even when the current regulator is multi-channeled.
(1) For achieving the above object, an aspect of the invention is directed to a current regulator including: a current regulating semiconductor device having, on the same semiconductor chip, a high-side transistor driving a load, a low-side transistor passing a circulating current of the load, a high-side current detection circuit detecting a current of the high-side transistor, and a low-side current detection circuit detecting a current of the low-side transistor; and/or a microcontroller outputting a PWM pulse for driving the load to the current regulating semiconductor device, and receiving outputs of the high-side current detection circuit and the low-side current detection circuit from the current regulating semiconductor device. The current regulating semiconductor device may include an output mixer which switches, in synchronization with the PWM pulse, between the output of the high-side current detection circuit and the output of the low-side current detection circuit on one signal line to output the output to the microcontroller.
   According to the configuration, it is possible to configure a current regulator using a microcontroller and a current regulating IC, and reduce the size and cost of the current regulator even when the current regulator is multi-channeled.
(2) In (1), it is preferable that the current regulating semiconductor device maintains an output for a certain period of time between the output of the high-side current detection circuit and the output of the low-side current detection circuit at a ground level or power supply level at the timing of switching, in synchronization with the PWM pulse, between the output of the high-side current detection circuit and the output of the low-side current detection circuit on one signal line.
(3) In (2), it is preferable that the current regulating semiconductor device includes a pulse width control register which sets a period of time in which the output of the current detection circuit is maintained at the ground level or power supply level.
(4) In (2), it is preferable that the microcontroller includes a state machine which detects the ground level or power supply level outputted for a certain period of time by the current regulating semiconductor device to transit a state using the detected result as an input.
(5) In (4), it is preferable that the microcontroller changes the processing content of the current detection circuit output of the current regulating semiconductor device according to the state of the state machine.

According to the aspect of the invention, it becomes possible to configure a current regulator using a microcontroller and a current regulating IC, and reduce the size and cost of the current regulator even when the current regulator is multi-channeled.

### BRIEF DESCRIPTION OF THE DRAWINGS

Fig. 1 is a block diagram showing the configuration of a current regulator according to one embodiment of the invention.
Fig. 2 is a block diagram showing the configuration of an output mixer used for the current regulator according to the embodiment of the invention.
Fig. 3 is an operation explanatory view of a selector used for the current regulator according to the embodiment of the invention.
Fig. 4 is a state transition diagram of a state machine included in a CPU used for the current regulator according to the embodiment of the invention.
Fig. 5 is a timing diagram showing the operation of the current regulator according to the embodiment of the invention.
Fig. 6 is a timing diagram showing the operation of the current regulator according to the embodiment of the invention.
Fig. 7 is a block diagram showing the configuration of an automatic transmission control unit using the current regulator according to the embodiment of the invention.
Fig. 8 is a block diagram showing the configuration of a brushless direct current motor control unit using the current regulator according to the embodiment of the invention.

### DESCRIPTION OF THE PREFERRED EMBODIMENTS

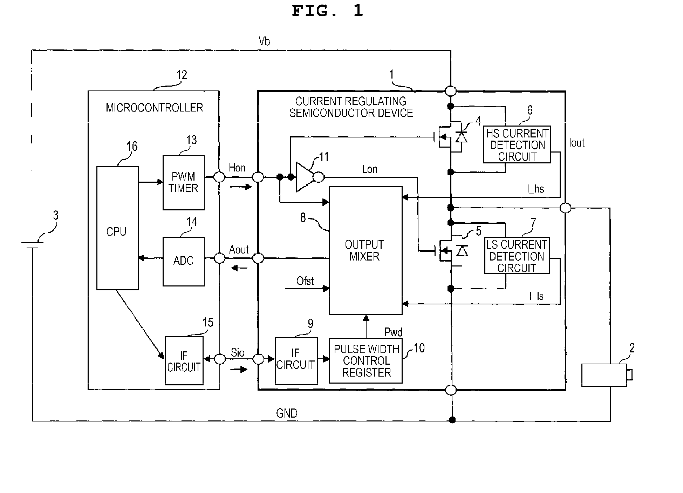

Hereinafter, the configuration and operation of a current regulator according to one embodiment of the invention will be described with reference to Figs. 1 to 6.

First, the configuration of the current regulator according to the embodiment will be described with reference to Fig. 1.

Fig. 1 is a block diagram showing the configuration of the current regulator according to the embodiment of the invention.

The current regulator includes a microcontroller 12 and a current regulating semiconductor device 1. Power supplied from a battery 3 is controlled by the current regulator and supplied to a solenoid 2 as its drive current.

The microcontroller 12 includes a PWM timer 13, an ADC 14, an IF circuit 15, and a CPU 16.

The microcontroller 12 receives values from various sensors (not shown) and computes from the values a current target value (duty of PWM pulse) to be flowed into the solenoid 2 using the CPU 16.

Moreover, the microcontroller 12 receives a mixed analog output Aout of current detection circuits from the current regulating semiconductor device 1 and converts the analog value into a digital value using the ADC 14. In the embodiment, a sampling period of the ADC 14 is defined as Ts. The CPU 16 corrects the digital value of the current detection circuit output obtained from the ADC 14 and computes an average value, to calculate the current value of the solenoid 2. Further, the CPU 16 computes using a PID compensator algorithm or the like, from a difference between the current target value and the current value of the solenoid 2 obtained as described above, the duty of PWM pulse with which the current value of the solenoid 2 follows the current target value.

The PWM timer 13 outputs a pulse Hon which turns on a high-side MOSFET 4 according to the duty output from the CPU 16.

The IF circuit 15 provides an interface function of transmitting and receiving, via a signal line Sio, a value retained by a pulse width control register 10 of the current regulating semiconductor device 1 in cooperation with an IF circuit 9.

Next, the current regulating semiconductor device 1 includes the high-side MOSFET 4, a low-side MOSFET 5, an HS current detection circuit 6, an LS current detection circuit 7, an output mixer 8, the IF circuit 9, the pulse width control register 10, and an inverter 11.

The current regulating semiconductor device 1, which is connected to the solenoid 2 and the battery 3 supplying a voltage to the solenoid 2, switches on and off a voltage to be applied to the solenoid 2 by PWM (Pulse Width Modulation) to drive a current flowing into the solenoid 2.

The high-side MOSFET 4 is a switch between the solenoid 2 and the battery 3. The high-side MOSFET 4 is turned on when the ON pulse Hon of the high-side MOSFET 4, the ON pulse Hon being input from the microcontroller 12, is at high level, and turned off when the ON pulse Hon is at low level. When the high-side MOSFET 4 is on, a current flowing into the solenoid 2 increases, while when the high-side MOSFET 4 is off, the current decreases.

The HS current detection circuit 6, which is connected in parallel to the high-side MOSFET 4, converts a current flowing into the high-side MOSFET 4, that is, a current flowing during the application of the battery voltage to the solenoid 2 into a voltage and outputs the voltage value to a signal I_hs.

The low-side MOSFET 5 is used as a path through which a current flowing into the solenoid 2 is circulated when the high-side MOSFET 4 is off. The low-side MOSFET 5 is turned on when a signal Lon obtained by inverting the ON pulse Hon by the inverter 11 is at high level, that is, for a period of time in which the high-side MOSFET 4 is off.

The LS current detection circuit 7, which is connected in parallel to the low-side MOSFET 5, converts a current flowing into the low-side MOSFET 5, that is, a circulating current of the solenoid 2 into a voltage and outputs the voltage value to a signal I_ls.

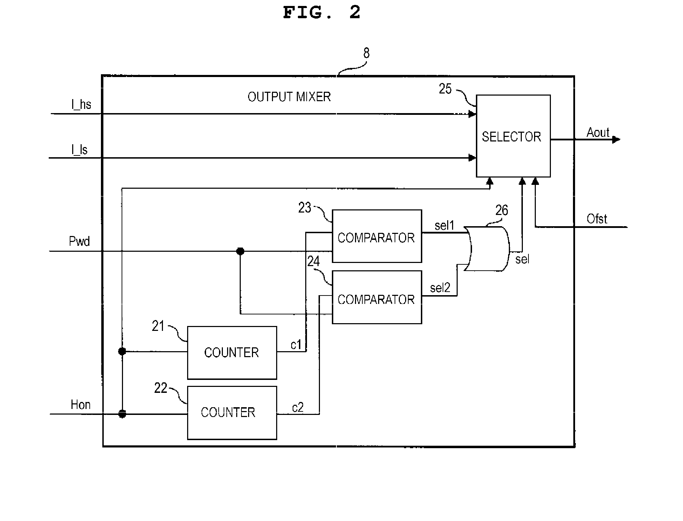

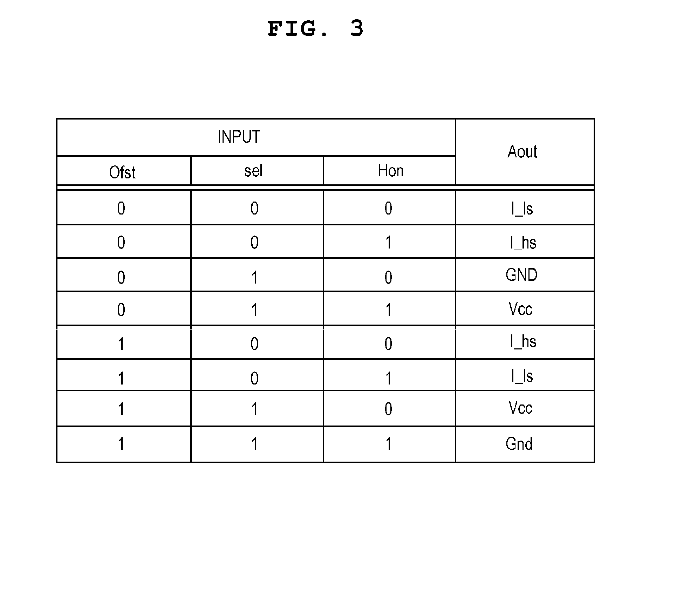

The output mixer 8 receives the signal I_hs from the HS current detection circuit 6, the signal I_ls from the LS current detection circuit 7, a pulse width target value Pwd from the pulse width control register 10, and an offset measuring mode signal Ofst (1: offset measuring mode, 0: normal mode) and mixes outputs of the respective current detection circuits to output the mixed output to the mixed analog output Aout. The output mixer 8 will be described later in detail with reference to Figs. 2 and 3.

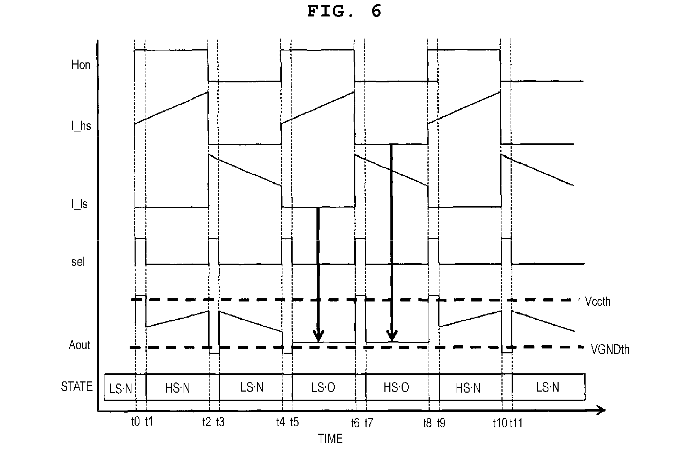

The offset measuring mode signal Ofst is output by the current regulating semiconductor device 1 itself in the case where the measurement of offset is needed. The case where the measurement of offset is needed is the case where the temperature of the current regulating semiconductor device 1 changes by a predetermined temperature or more. When the temperature of the current regulating semiconductor device 1 changes by a predetermined temperature or more, the offset measurement is needed. Therefore, the current regulating semiconductor device 1 includes therein a temperature sensor. When the temperature sensor detects a change in temperature by a predetermined temperature or more, the current regulating semiconductor device 1 outputs the offset measuring mode signal Ofst to the output mixer 8. The operation of the output mixer 8 in offset measurement will be described with reference to Fig. 6.

The IF circuit 9 provides an interface function with which the microcontroller 12 transmits and receives, via the signal line Sio, a value retained by the pulse width control register 10.

The pulse width control register 10 retains a value indicating a pulse width of a GND level or power supply level to be inserted at a timing at which the output mixer 8 switches between the signal I_hs and the signal I_ls.

Next, the configuration of the output mixer 8 used for the current regulator according to the embodiment will be described with reference to Fig. 2.

Fig. 2 is a block diagram showing the configuration of the output mixer used for the current regulator according to the embodiment of the invention.

The output mixer 8 includes a counter 21, a counter 22, a comparator 23, a comparator 24, an OR gate 26, and a selector 25.

The counter 21 is an up counter which is reset at the rising edge of the ON pulse Hon, and outputs its count value c1. The counter 22 is an up counter which is reset at the falling edge of the ON pulse Hon, and outputs its count value c2.

The comparator 23 compares the pulse width target value Pwd from the pulse width control register 10 with the count value c1 of the counter 21. When the count value c1 is smaller than the pulse width target value Pwd, the comparator 23 outputs 1 to a signal line sell, while when the count value c1 is the pulse width target value Pwd or more, the comparator 23 outputs 0.

The comparator 24 compares the pulse width target value Pwd from the pulse width control register 10 with the counter value c2 of the counter 22. When c2 is smaller than the pulse width target value Pwd, the comparator 24 outputs 1 to a signal line sel2, while when c2 is the pulse width target value Pwd or more, the comparator 24 outputs 0.

The OR gate 26 outputs the logical sum of the signal line sell and the signal line sel2 to a signal line sel.

With the combination of the counter 21, the counter 22, the comparator 23, the comparator 24, and the OR gate 26 described above, a pulse which is 1 during a certain time indicated by the pulse width target value Pwd is output to the signal line sel after the rising edge and falling edge of the ON pulse Hon.

Next, the operation of the selector 25 used for the current regulator according to the embodiment will be described with reference to Fig. 3.

Fig. 3 is an operation explanatory view of the selector used for the current regulator according to the embodiment of the invention.

The selector 25 selects, based on the input and output relation shown in Fig. 3, the signal I_hs, the signal I_ls, the ground level GND, or the power supply level Vcc and outputs the selected value to the mixed analog output Aout.

Specifically, when, for example, the offset measuring mode signal Ofst is "0", the signal line sel is "0", and the ON pulse Hon is "0", the selector 25 selects the "signal I_ls" as the mixed analog output Aout. Moreover, when, for example, the offset measuring mode signal Ofst is "0", the signal line sel is "0", and the ON pulse Hon is "1", the selector 25 selects the "signal I_hs" as the mixed analog output Aout.

Moreover, when, for example, the offset measuring mode signal Ofst is "0", the signal line sel is "1", and the ON pulse Hon is "0", the selector 25 selects the "ground level GND" as the mixed analog output Aout. Moreover, when, for example, the offset measuring mode signal Ofst is "0", the signal line sel is "1", and the ON pulse Hon is "1", the selector 25 selects the "power supply level Vcc" as the mixed analog output Aout.

Moreover, when, for example, the offset measuring mode signal Ofst is "1", the signal line sel is "0", and the ON pulse Hon is "0", the selector 25 selects the "signal I_hs" as the mixed analog output Aout. Moreover, when, for example, the offset measuring mode signal Ofst is "1", the signal line sel is "0", and the ON pulse Hon is "1", the selector 25 selects the "signal I_ls" as the mixed analog output Aout.

Moreover, when, for example, the offset measuring mode signal Ofst is "1", the signal line sel is "1", and the ON pulse Hon is "0", the selector 25 selects the "power supply level Vcc" as the mixed analog output Aout. Moreover, when, for example, the offset measuring mode signal Ofst is "1", the signal line sel is "1", and the ON pulse Hon is "1", the selector 25 selects the "ground level GND" as the mixed analog output Aout.

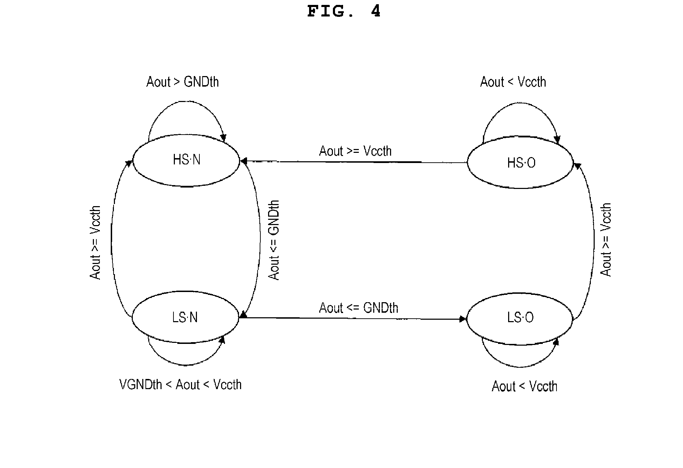

Next, the operation of a state machine included in the CPU 16 used for the current regulator according to the embodiment will be described with reference to Fig. 4.

Fig. 4 is a state transition diagram of the state machine included in the CPU used for the current regulator according to the embodiment of the invention.

Fig. 4 shows the state transition diagram of the state machine used when the CPU 16 performs the processing of the digital value of the mixed analog output Aout. The state machine includes four states, an HS/N state, an LS/N state, an HS/O state, and an LS/O state.

The HS/N state is a state of detecting a high-side current. In the HS/N state, the CPU 16 corrects the digital value of the mixed analog output Aout using the gain and offset of the HS current detection circuit 6 to obtain the digital value of the high-side current.

The LS/N state is a state of detecting a low-side current. In the LS/N state, the CPU 16 corrects the digital value of the mixed analog output Aout using the gain and offset of the LS current detection circuit 7 to obtain the digital value of the low-side current.

The HS/O state is a state of measuring the offset of the HS current detection circuit 6. In the HS/O state, the CPU 16 obtains the offset of the HS current detection circuit 6 from the average digital value of the mixed analog output Aout.

The LS/O state is a state of measuring the offset of the LS current detection circuit 7. In the LS/O state, the CPU 16 obtains the offset of the LS current detection circuit 7 from the average digital value of the mixed analog output Aout.

The transition between the states is performed every sampling period Ts of the ADC 14. As shown in Fig. 4, transition determination is performed by comparing the digital value of the mixed analog output Aout with a ground level threshold value GNDth and a power supply level threshold value Vccth.

That is, in the HS/N state, when the digital value of the mixed analog output Aout is larger than the ground level threshold value GNDth, the HS/N state is maintained. In the HS/N state, when the digital value of the mixed analog output Aout becomes the ground level threshold value GNDth or less, the state transits to the LS/N state.

In the LS/N state, when the digital value of the mixed analog output Aout is larger than the ground level threshold value GNDth and smaller than the power supply level threshold value Vccth, the LS/N state is maintained. In the LS/N state, when the digital value of the mixed analog output Aout becomes the power supply level threshold value Vccth or more, the state transits to the HS/N state. In the LS/N state, when the digital value of the mixed analog output Aout becomes the ground level threshold value GNDth or less, the state transits to the LS/O state.

In the LS/O state, when the digital value of the mixed analog output Aout is smaller than the power supply level threshold value Vccth, the LS/O state is maintained. In the LS/O state, when the digital value of the mixed analog output Aout becomes the power supply level threshold value Vccth or less, the state transits to the HS/O state.

In the HS/O state, when the digital value of the mixed analog output Aout is smaller than the power supply level threshold value Vccth, the HS/O state is maintained. In the HS/O state, when the digital value of the mixed analog output Aout becomes the power supply level threshold value Vccth or more, the state transits to the HS/N state.

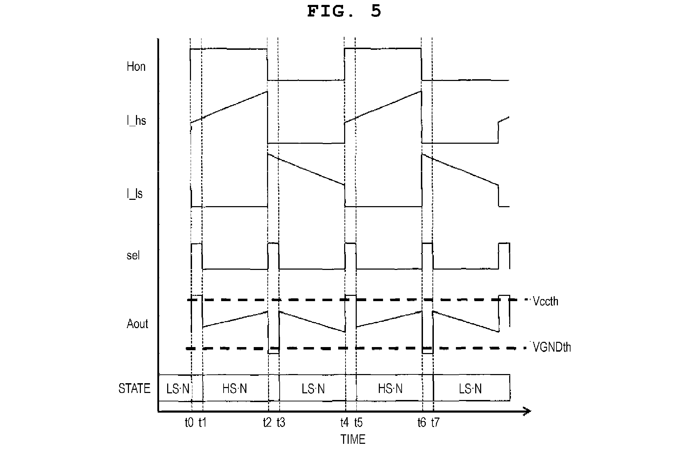

Next, the operation of the current regulator according to the embodiment will be described with reference to Figs. 5 and 6.

Figs. 5 and 6 are timing diagrams showing the operation of the current regulator according to the embodiment of the invention.

Fig. 5 is the timing diagram of the current regulator in normal operation.

The signal line sel becomes "1" simultaneously with the ON pulse Hon becoming "1" at a time t0, and the signal line sel continues to be "1" until a time t1. While the signal line sel is "1", the power supply level is output to the mixed analog output Aout.

Here, the value of a pulse width control register is set such that a time width between t0 and t1 in which the signal line sel is "1" coincides with the sampling period Ts. Between t0 and t1, the power supply level output to the mixed analog output Aout is sampled only once.

Since the power supply level of the mixed analog output Aout is detected between t0 and t1, the state of the state machine transits to the HS/N state, and the HS/N state continues until a time t2. During the HS/N state, the voltage value of the HS current detection circuit 6 is output to the mixed analog output Aout. The CPU 16 corrects the value of the mixed analog output Aout using the gain and offset of the HS current detection circuit 6 to obtain a high-side current value.

Subsequently, the signal line sel becomes "1" simultaneously with the ON pulse Hon becoming 0 at the time t2, and the signal line sel continues to be "1" until a time t3. While the signal line sel is "1", the GND level is output to the mixed analog output Aout.

Since the GND level of the mixed analog output Aout is detected between t2 and t3, the state of the state machine transits to the LS/N state, and the LS/N state continues until t4. During the LS/N state, the voltage value of the LS current detection circuit 7 is output to the mixed analog output Aout. The CPU 16 corrects the value of the mixed analog output Aout using the gain and offset of the LS current detection circuit 7 to obtain a low-side current value.

In the gain/offset correction in the CPU 16, the parameters of the gain and offset used for the correction are different between the case of obtaining a high-side current by the correction and the case of obtaining a low-side current. Accordingly, the CPU 16 needs to distinguish whether a current captured is a high-side current or a low-side current. This distinguishing can be done based on the state of the state machine. The CPU 16 determines based on the state of the state machine whether a high-side current is captured or a low-side current is captured, and makes corrections using the parameters of gain and offset according to the high-side current or the low-side current to obtain a corrected high-side current or low-side current. In this manner, the CPU 16 of the microcontroller 12 is configured to change the processing content of the current detection circuit output of the current regulating semiconductor device according to the state of the state machine.

Here, each of intervals between t0 and t1, between t2 and t3, between t4 and t5, and between t6 and t7 is set to the sampling period Ts. In each of the intervals, the power supply level or GND level output to the mixed analog output Aout is sampled only once. The state machine described with reference to Fig. 4 compares the sampling data of the mixed analog output Aout with the power supply level or GND level to perform state transition. By setting the width of the power supply level or GND level to be inserted into the mixed analog output Aout to Ts as described above, continuous transition of the state is prevented.

As has been described above, when the HS current detection circuit 6 and the LS current detection circuit 7 are switched to output the output to the mixed analog output Aout, the GND level or power supply level is inserted at the switching timing for a certain period of time, whereby it is possible to easily and reliably determine whether data before or after the certain period of time is the output of the HS current detection circuit 6 or the LS current detection circuit 7. Therefore, the average current of the solenoid can be computed with a simple algorithm from the digital value of the mixed analog output Aout.

Further, since the pulse width of the GND level or power supply level to be inserted into the mixed analog output Aout is variable with the pulse width target value Pwd from the pulse width control register 10, an ADC having a different sampling period can also be dealt with.

In the related art, two signals between an IC and a microcontroller and two channels for an AD converter of the microcontroller are required for capturing high-side and low-side current detection signals. Here, in the case of a current regulator which performs current regulation for a plurality of channels, for example, six channels, 12 signals between an IC and a microcontroller and 12 channels for an AD converter of the microcontroller are required for capturing high-side and low-side current detection signals. In contrast, in the embodiment, the current regulating semiconductor device switches, in synchronization with a PWM pulse, between an output of the high-side current detection circuit and an output of the low-side current detection circuit to output the output on one signal line. Therefore, only one signal is required between the IC and the microcontroller, and only one channel is required for the AD converter of the microcontroller. Here, in the case of a current regulator which performs current regulation for a plurality of channels, for example, six channels, six signals between an IC and a microcontroller and six channels for an AD converter of the microcontroller are required for capturing high-side and low-side current detection signals. Therefore, the numbers of them can be reduced to half the numbers in the related art. Accordingly, it is possible to avoid an increase in the cost and size of an IC package due to an increase in the number of pins of the IC, and an increase in cost due to adoption of a high-function microcomputer mounting thereon a multi-channel AD converter. As a result, the entire size of the current regulator can be reduced, and the cost can be reduced.

Due to the simplification of the average current computing algorithm and the higher degree of freedom of ADC specifications described above, a low-cost microcontroller can be adopted, making it possible to suppress the entire cost of the current regulator.

Fig. 6 is a timing diagram of the current regulator in offset measurement.

The operation until the time t4 is the same as that of the timing diagram in Fig. 5, and therefore the description is omitted herein.

The signal line sel becomes "1" simultaneously with the ON pulse Hon becoming "1" at the time t4, and the signal line sel continues to be "1" until the time t5. While the signal line sel is "1", the GND level is output to the mixed analog output Aout. Since the GND level of the mixed analog output Aout is detected between t4 and t5, the state of the state machine transits to the LS/O state, and the LS/O state continues until t6. During the LS/O state, the offset voltage value of the LS current detection circuit 7 is output to the mixed analog output Aout. The CPU 16 computes the average value of the mixed analog output Aout to thereby obtain the offset value of the LS current detection circuit 7. This value is used for correcting the value of the mixed analog output Aout later in the LS/N state.

Subsequently, the signal line sel becomes "1" simultaneously with the ON pulse Hon becoming "0" at the time t6, and the signal line sel continues to be "1" until the time t7. While the signal line sel is "1", the power supply level is output to the mixed analog output Aout. Since the power supply level of the mixed analog output Aout is detected between t6 and t7, the state of the state machine transits to the HS/O state, and the HS/O state continues until t8. During the HS/O state, the offset voltage value of the HS current detection circuit 6 is output to the mixed analog output Aout. The CPU 16 computes the average value of the mixed analog output Aout to thereby obtain the offset value of the HS current detection circuit 6. This value is used for correcting the value of the mixed analog output Aout later in the HS/N state.

Here, the offset value of the LS current detection circuit 7 and the offset value of the HS current detection circuit 6 are stored respectively in different areas (different addresses) of a storage means within the microcontroller 12. Here, the microcontroller 12 needs to distinguish whether the captured offset value is a high-side one or low-side one. This distinguishing can be done based on the state of the state machine. The microcontroller 12 is configured to change an area for storing the offset value obtained by distinguishing based on the state of the state machine. In this manner, the microcontroller 12 is configured to change the processing content of the current detection circuit output of the current regulating semiconductor device based on the state of the state machine.

Subsequently, the signal line sel becomes "1" simultaneously with the ON pulse Hon becoming "1" at the time t8, and the signal line sel continues to be "1" until the time t9. While the signal line sel is "1", the power supply level is output to the mixed analog output Aout. Since the power supply level of the mixed analog output Aout is detected between t8 and t9, the state of the state machine transits to the HS/N state. Thereafter, the state of the state machine is returned to a state of repeating the HS/N state and the HS/O state as normal operation.

As has been described above, by changing the pulse pattern of the GND level or power supply level to be inserted when the HS current detection circuit 6 and the LS current detection circuit 7 are switched to output the output to the mixed analog output Aout, switching of the measuring mode can be determined easily and reliably. Therefore, a method for processing the mixed analog output Aout can be changed with a simple algorithm.

Although, in the embodiment, an example of switching to the mode of measuring the offsets of the HS current detection circuit 6 and the LS current detection circuit 7 has been shown, the invention is not limited to this. For example, it is possible to switch to a mode of outputting another measured value such as the voltage value of a solenoid output terminal.

Thus, even in the case where it is desired to change a measuring timing of an analog value within the current regulating semiconductor device or to perform additional monitoring, the case can be dealt with without increasing signals between the microcontroller and the current regulating semiconductor device. Therefore, the entire size and cost of the current regulator can be suppressed.

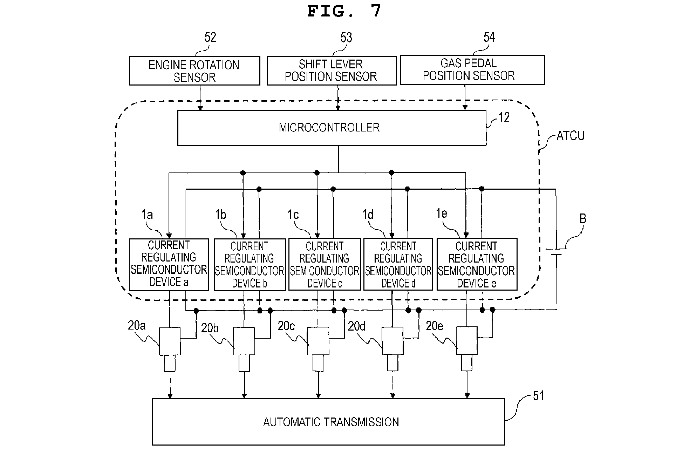

Next, the configuration and operation of an automatic transmission control unit using the current regulator according to the embodiment of the invention will be described with reference to Fig. 7.

Fig. 7 is a block diagram showing the configuration of the automatic transmission control unit using the current regulator according to the embodiment of the invention. In Fig. 7, the same reference and numeral signs as those of Fig. 1 show the same portions.

The automatic transmission control unit ATCU, which corresponds to a current regulator of this embodiment, includes the microcontroller 12 shown in Fig. 1 and a plurality of current regulating semiconductor devices 1a, ..., and 1e each corresponding to the current regulating semiconductor device 1.

The microcontroller 12 receives sensor values from an engine rotation sensor 52, a shift lever position sensor 53, and a gas pedal position sensor 54, computes an optimum transmission gear ratio from the input sensor values, computes hydraulic pressure target values of a plurality of clutches (not shown) included in a transmission 51 and current value target values Ia*, ..., and Ie* of solenoids 20a, ..., and 20e corresponding to the hydraulic pressures for realizing the transmission gear ratio, and outputs the current value target values Ia*, ..., and Ie* to the current regulating semiconductor devices 1a, ..., and 1e.

As has been described in the above-described embodiment, in this embodiment, the number of signals between the microcontroller 12 and the current regulating semiconductor device 1 is reduced, and further the low-cost microcontroller 12 is used, so that it is possible to realize the automatic transmission control unit ATCU which is small and low cost.

In Fig. 7, the microcontroller 12 receives the sensor values from the three sensors, the engine rotation sensor 52, the shift lever position sensor 53, and the gas pedal position sensor 54. However, the number and type of sensors from which the microcontroller 12 receives values may be changed according to a transmission control method. Moreover, in Fig. 7, the microcontroller 12 directly receives the sensor values from the sensors. However, the microcontroller 12 may receive the sensor values via another microcontroller or an IC. Moreover, Fig. 7 shows an example in which the automatic transmission 51 includes five clutches. However, the number of clutches and the number of solenoid current regulators corresponding thereto may be changed according to a transmission mechanism.

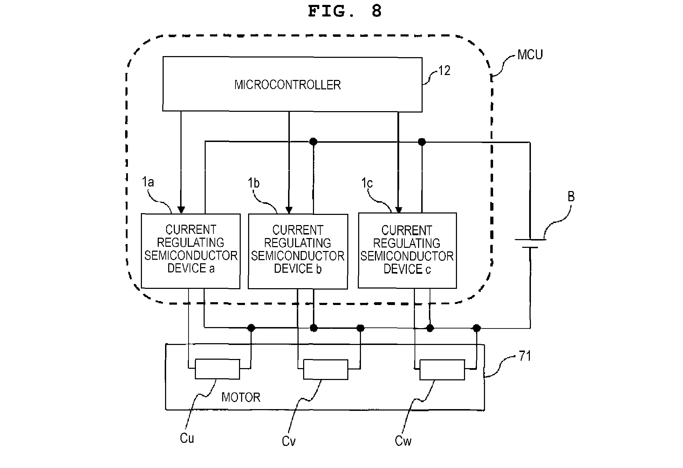

Next, the configuration and operation of a brushless direct current motor control unit using the current regulator according to the embodiment of the invention will be described with reference to Fig. 8.

Fig. 8 is a block diagram showing the configuration of the brushless direct current motor control unit using the current regulator according to the embodiment of the invention. In Fig. 8, the same reference and numeral signs as those of Fig. 1 show the same portions.

The brushless direct current motor control unit MCU, which corresponds to a current regulator of this embodiment, includes the microcontroller 12 shown in Fig. 1 and a plurality of current regulating semiconductor devices 1a, 1b, and 1c.

The microcontroller 12 computes three-phase current target values for three-phase coils Cu, Cv, and Cw of a motor 71 for realizing the target number of rotations and torque of the motor, and outputs the current value target values Iu*, Iv*, and Iw* to the current regulating semiconductor devices 1a, 1b, and 1c.

As has been described in the above-described embodiment, according to this embodiment, the number of signals between the microcontroller 12 and the current regulating semiconductor device 1 is reduced, and further the low-cost microcontroller 12 is used, so that it is possible to realize the brushless direct current motor control unit MCU which is small and low cost.

As has been described above, according to the embodiment, since outputs of two current detection circuits whose objects to be measured are different from each other are output on one signal line, the number of signals between an IC and a microcontroller and the number of AD converters used in the microcontroller can be reduced.

Further, when the outputs of the current detection circuits whose objects to be measured are different from each other are switched, the ground level or power supply level is output for a certain period of time. Therefore, the microcontroller can acquire an output switching timing between the current detection circuits whose objects to be measured are different from each other only by comparing the sampling value of the AD converter with the threshold value of the ground level or power supply level. This makes it possible to easily realize a program for correcting sampling data every object to be measured for higher accuracy for current detection.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A current regulator comprising:
a current regulating semiconductor device (1) having, on the same semiconductor chip, a high-side transistor driving a load, a low-side transistor passing a circulating current of the load, a high-side current detection circuit (6) detecting a current of the high-side transistor, and a low-side current detection circuit (7) detecting a current of the low-side transistor; and
a microcontroller (12) outputting a PWM pulse for driving the load to the current regulating semiconductor device (1), and receiving outputs of the high-side current detection circuit (6) and the low-side current detection circuit (7) from the current regulating semiconductor device (1), wherein
the current regulating semiconductor device (1) includes an output mixer (8) which switches, in synchronization with the PWM pulse, between the output of the high-side current detection circuit (6) and the output of the low-side current detection circuit (7) on one signal line to output the output to the microcontroller (12).

2. The current regulator according to claim 1, wherein the current regulating semiconductor device (1) maintains an output for a certain period of time between the output of the high-side current detection circuit (6) and the output of the low-side current detection circuit (7) at a ground level or power supply level at the timing of switching, in synchronization with the PWM pulse, between the output of the high-side current detection circuit (6) and the output of the low-side current detection circuit (7) on one signal line.

3. The current regulator according to claim 1 or 2,
wherein
the current regulating semiconductor device (1) includes a pulse width control register (10) which sets a period of time in which the output of the current detection circuit is maintained at the ground level or power supply level.

4. The current regulator according to at least one of claims 1 to 3, wherein
the microcontroller (12) includes a state machine which detects the ground level or power supply level outputted for a certain period of time by the current regulating semiconductor device (1) to transit a state using the detected result as an input.

5. The current regulator according to at least one of claims 1 to 4, wherein
the microcontroller (12) changes the processing content of the current detection circuit output of the current regulating semiconductor device (1) according to the state of the state machine.
